# EUROPÄISCHE PATENTANMELDUNG

(11) **EP 0 677 248 A1**
(43) Veröffentlichungstag der Anmeldung: **18.10.1995**
(21) Anmeldenummer: 95104349.6
(22) Anmeldetag: 24.03.1995
(51) Int. Cl.: A23L 1/01, A23B 7/06

(54) **Verwendung von wenigstens teilweise entsalztem Wasser**

(30) Priorität: 13.04.1994 DE 4412696
(71) Anmelder: Brita Wasser-Filter-Systeme GmbH, D-65232 Taunusstein-Neuhof (DE)
(72) Erfinder: Belz, Rolf, D-65329 Hohenstein-Breithardt (DE)
(74) Vertreter: Weber, Dieter, Dr.

(57) **Zusammenfassung**

Wenigstens teilsweise entsalztes Wasser wird zum Garen von Nahrungs- und Genußmitteln verwendet, um den Austritt von Geschmacks- und Geruchsstoffen sowie gegebenenfalls Farbstoffen, Vitaminen und Eiweiß in das Garwasser zu reduzieren.

## Beschreibung

Es ist bekannt, in Gewerbebetrieben und Haushaltungen im Brauch- und Trinkwasserleitungs-System Geräte zur Wasserenthärtung zu installieren, um die Ablagerung von Erdalkalicarbonaten insbesondere in Sanitäranlagen und dem Erhitzen von Leitungswasser dienenden Geräten zu vermindern. Bei einer solchen Wasserenthärtung werden Erdalkali-Kationen gegen Alkali-Kationen ausgetauscht, wobei eher ein Aufsalzung als eine Entsalzung vorgenommen wird.

Es ist auch bekannt, Wasser für die Bereitung von Tee und Kaffee mit lonenaustauschern teilweise zu entsalzen, da man feststellte, daß mit solchermaßen behandeltem Wasser die Aromastoffe besser aus den pflanzlichen Produkten in das Wasser extrahiert und darin gelöst werden, so daß die Geschmacks- und Geruchsqualität des Getränkes verbessert wird.

Beim Garen von Nahrungs- und Genußmitteln besteht jedoch das umgekehrte Problem, daß man nämlich so gut wie möglich vermeiden möchte, daß Geschmacks- und Geruchsstoffe aus der pflanzlichen oder tierischen Zelle in das Garwasser extrahiert werden. Auch besteht der Wunsch, beim Garen von Pflanzenprodukten den Austritt von Farbstoffen und Vitaminen in das Garwasser zu reduzieren und beim Garen von Fleisch und Fisch den Austritt von Eiweiß aus den tierischen Zellen so weit wie möglich zu vermeiden.

Die der Erfindung zugrundeliegende Aufgabe bestand somit darin, beim Garen von Nahrungs- und Genußmitteln die Qualität des gegarten Produktes gegenüber dem Stand der Technik zu verbessern. Insbesondere bestand die Aufgabe darin, den Austritt von Geschmacks- und Geruchsstoffen sowie gegebenenfalls Farbstoffen, Vitaminen und Eiweiß in das Garwasser zu reduzieren.

Im Hinblick auf die Erfahrungen bei der Bereitung von Tee und Kaffee war es überraschend, daß diese Aufgabe zu lösen ist, wenn man zum Garen von Nahrungs- und Genußmitteln wenigstens teilweise entsalztes Wasser verwendet.

Bei einer solchen Verwendung wäre zu erwarten gewesen, daß ein verstärkter Austritt von Geschmacks- und Geruchsstoffen sowie Farbstoffen in das Garwasser erfolgt, was jedoch überraschenderweise nicht eintritt. Bei der erfindungsgemäßen Verwendung bekommt man im Vergleich mit der Verwendung normalen Leitungswassers eine intensivere Geschmacksentfaltung und eine Erhaltung der natürlichen Farbe bei fast allen Gemüsesorten. Erfindungsgemäß gegartes Gemüse behält einen gleichmäßigen Biß.

Man bekommt beim Garen geringere Schäumung, insbesondere bei Teigwaren, Kartoffeln und Reis, und geringeren Austritt von Stärke in das Garwasser. Beim Kochen und Poschieren von Fleisch und Fisch gelangt wesentlich weniger Eiweiß in das Wasser. Die Struktur von Fisch bleibt in sich geschlossen und wird nicht klebrig.

Erfindungsgemäß bekommt man geringere Verluste von Vitaminen, Mineralien und Spurenelementen, insbesondere bezüglich wasserlöslicher Vitamine, wie von Vitamin B. Das Erfordernis des Salzzusatzes beim Garen zur Erzielung des gewünschten Wohlgeschmackes des Garproduktes ist geringer. Die Reduzierung des Salzzusatzerfordernisses stellt einen gesundheitsfördernden Effekt dar.

Besonders überraschende Ergebnisse erzielt man auch bei tiefgefrorenen Lebensmitteln, wie Spargeln und Prinzeßbohnen, die im Gegensatz zu allgemeinen Erfahrungen bei Anwendung der Erfindung nicht schwammig werden und ihre Farbe gut behalten.

Wenn in diesem Zusammenhang von einem Garen die Rede ist, so sollen damit alle bei der Zubereitung von Nahrungs- und Genußmitteln erforderlichen Methoden zu deren Erhitzen in Wasser verstanden werden. Das Garen dient einem gewissen Aufschluß von pflanzlichen und tierischen Zellen und damit besserer Verzehrbarkeit und Verdaubarkeit, der Entwicklung von Duft- und Geschmacksstoffen, der Erhöhung des Genußwertes durch Struktur- und Farbänderung sowie der Abtötung von gesundheitsschädlichen Keimen. Unter den Begriff des Garens fallende Methoden sind Planchieren (Abbrühen bei 75 bis 100 °C), Pochieren (Garziehen bei 65 bis 90 °C), Kochen (bei 100 °C), Sieden (Halten knapp unter dem Siedepunkt, wie 96 °C), Dämpfen (mit geschlossenem Kochgeschirr auf Sieb bei 100 °C) und Dämpfen mit Druck (im Druckkochtopf bei 110 °C). Die erfindungsgemäße Methode eignet sich insbesondere zum Garen von pflanzlichen Produkten, von Fleisch oder Fisch, von Tiefkühllebensmitteln und von Teigwaren.

Wenn hier von wenigstens teilweise entsalztem Wasser die Rede ist, ist damit ein gegenüber normalem Leitungswasser wenigstens teilweise entsalztes Garwasser gemeint. Besonders günstig ist voll entsalztes, wie beispielsweise destilliertes Wasser, doch wird dieses in den erforderlichen Mengen aus Kostengründen nicht verfügbar sein. Annähernd gleichen bzw. ausreichenden Effekt bekommt man auch bei Verwendung von nur teilweise entsalztem Wasser.

Zweckmäßig verwendet man erfindungsgemäß Wasser mit einer Karbonathärte von höchstens 8, vorzugsweise von höchstens 7 und insbesondere von höchstens 2 °dH. Die Karbonathärte ist ein Maß für den Gehalt an Erdalkalicarbonaten.

Die Gesamthärte des erfindungsgemäß verwendeten Wassers liegt zweckmäßig bei höchstens 12, vorzugsweise bei höchstens 10,5 und insbesondere bei höchstens 5 °dH. Der pH-Wert liegt günstigerweise unter 7,5, vorzugsweise bei höchstens 7, insbesondere unter 6,5. Der Calciumionengehalt ist günstigerweise geringer als 60, vorzugsweise geringer als 20 mg/l. Der Gesamtgehalt an Na-, K-, Mg- und Ca-Kationen liegt zweckmäßig unter 100, vorzugsweise unter 70, besonders unter 50 mg/l.

Das erfindungsgemäß verwendete Wasser ist zweckmäßig ein solches, das unter Verwendung eines lonenaustauschers wenigstens teilweise entsalzt wurde. Dieser lonenaustauscher kann aus anderen Gründen günstigerweise im Gemisch mit einem Adsorptionsmittel, wie Aktivkohle, benutzt werden, welches vor allem Chlor entfernt, aber keine Entsalzung des Wassers bewirkt und zu dem erwünschten Haupteffekt nichts oder nichts wesentliches beiträgt.

Für die Aufbereitung des erfindungsgemäß verwendeten Wassers benutzt man zweckmäßig wenigstens einen schwachsauren Kationenaustauscher in der Wasserstofform. Solche Kationenaustauscher sind beispielsweise solche auf Polyacrylatbasis, die einen wesentlichen Teil der Erdalkalikationen gegen Wasserstoffionen austauschen. Selbstverständlich können die lonenaustauscher auch zusammen mit anderen als den angegebenen schwach sauren Kationenaustauschern, wie zusammen mit Anionenaustauschern, benutzt werden, um zusätzliche Effekte bezüglich des erfindungsgemäß verwendeten Wassers zu erzielen. Zur Aufbereitung des erfindungsgemäß verwendeten Wassers kann normales Leitungswasser oder vorher mit üblichen Anlagen teilenthärtetes Wasser durch den lonenaustauscher oder ein Gemisch desselben mit anderen lonenaustauschern oder Adsorptionsmitteln oder nacheinander durch Schichten dieser Stoffe geschickt werden.

Die folgenden Beispiele und Vergleichsbeispiele dienen der weiteren Erläuterung der Erfindung.

### Vergleichsbeispiel 1 und Beispiele 1 bis 3

In dem folgenden Vergleichsbeispiel und den Beispielen nach der Erfindung wurden jeweils in 2 I Wasser ca. 800 g geschälte und in Scheiben geschnittene Karotten gleicher Provenienz ohne Gewürz 10 min gekocht. Sodann wurde das Aussehen des Garproduktes und des Kochwassers beurteilt und auf einer Bewertungsskala mit den Ziffern 1 bis 6 bewertet. Außerdem wurde der prozentuale Kochverlust ermittelt.

### Vergleichsbeispiel 1

Es wurde normales Leitungswasser aus Taunusstein-Neuhof mit einem pH-Wert von 8,15, einer Karbonathärte von 12,6 °dH, einer Gesamthärte von 16,6 °dH und einem Calciumionengehalt von 98,5 mg/l verwendet. Der Gesamtgehalt von Natrium-, Kalium-, Magnesium- und Calciumionen lag bei 133,9 mg/l.

Die Beurteilung des Kochproduktes war folgende: Starker Austritt von Farbe ins Kochwasser, dunkelrote Schaumbildung, Wasser stark trüb und grau. Die Karotten sind nach dem Kochvorgang etwas dunkler, ungleich gegart und zum Teil zu weich.

Bewertung: 5 bis 6, Kochverlust 10,29 %.

### Beispiel 1

Es wurde Wasser verwendet, das durch Behandlung des im Vergleichsbeispiel 1 genannten Leitungswassers mit einem schwachsauren Kationenaustauscher "Lewatit CNP" (Bayer Leverkusen) in der Wasserstoffform erhalten worden war. Der pH-Wert des Wassers war 3,13, die Karbonathärte 0, die Gesamthärte 2,4 °dH, der Calciumgehalt 9,6 mg/l und der Gesamtgehalt von Natrium, Kalium, Magnesium und Calcium 36,5 mg/l.

Der Kochversuch ergab wenig hellen Schaum. Das Wasser blieb klar, die Karotten waren gleichmäßig bißfest und gut in Farbe und Form.

Bewertung: 2, Kochverlust 3,58 %.

### Beispiel 2

Zum Garen wurde ein Wasser verwendet, das durch Vermischen von 1 l Leitungswasser aus Beispiel 1 und 1 l behandeltem Wasser aus Beispiel 2 erhalten worden war. Der pH-Wert war 6,82, die Karbonathärte 5,6 °dH, die Gesamthärte 9,8 °dH, der Calciumgehalt 54,8 mg/l und der Gesamtkationengehalt von Natrium, Kalium, Magnesium und Calcium 85,7 mg/l.

Beim Kochen bekam man sehr wenig Schäumung mit kleiner fester Schaumkrone. Das Wasser blieb glasklar, die Karotten zeigten fast keinen Farbverlust. Die natürliche Farbe wurde erhalten. Das Produkt war bißfest und zeigte gleichmäßige Garung.

Bewertung: 1, Kochverlust 5,48 %.

### Beispiel 3

Es wurde destilliertes Wasser mit einem pH-Wert von 7,0 und mit Karbonathärte, Gesamthärte und Kationengehalt 0 verwendet.

Man bekam eine leichte dunkelrote Schäumung, das Wasser blieb klar und färbte sich nur leicht gelb. Die Karotte war bißfest und gleichmäßig gegart. Im Kochwasser wurde wenig Karottengeschmack ermittelt. Die Karotte hatte eine schöne Farbe.

Bewertung: 1, Kochverlust 2 %.

### Beispiel 4 und Vergleichsbeispiel 2

a) Gemüse: Kohl, Spinat
b) Tafelspitz
c) Salzkartoffeln
d) Spaghetti
e) Patna-Reis
f) Zanderfilet
g) gefrorener Stangensparel

Im jeweiligen Vergleichsversuch A wurde Leitungswasser aus Wiesbaden-Breckenheim mit einem pH-Wert von 7,8, einer Karbonathärte von 14,42 °dH und einer Gesamthärte von 17,80 °dH verwendet. In den Versuchen gemäß der Erfindung B wurde dieses Wasser nach Behandlung mit lonenaustauscher und Aktivkohle im Gemisch miteinander verwendet. Der pH-Wert lag bei 6,5, die Karbonathärte bei 1 °dH und die Gesamthärte bei 4,5 °dH.
a)
   A. Starke Schäumung, Kochwasser war trüb, das Gemüse gab Farbstoffe an das Wasser ab. Der Gemüsefond nahm voll den Gemüsegeschmack an, die außenliegenden Pflanzenzellen wurden stark angegriffen (mikroskopische Untersuchung), der Geschmack des Gemüses war flach, beim Spinat trat intensiver Wurzelgeschmack auf, beim Kohl starker Kohlgeruch.
   B. Ganz geringe Schäumung, Wasser blieb glasklar, minimale Abgabe von Farbstoffen an das Kochwasser. Die Garung war gleichmäßig, das Gemüse behielt eine bessere Struktur und war bißfest. Das Wasser nahm sehr wenig den Geschmack des Gemüses an, beim Kochen von Kohl trat weniger Geruch auf. Der Geschmack war bei weniger Salzverbrauch intensiver, keine Verfärbung des Kochgutes, geringerer Kochverlust.
b)
   A. Sehr starke Schäumung, starker Austritt von Eiweiß, sehr starker Übergang von Geschmacksstoffen in die Brühe, starker Gewichtsverlust.
   B. Geringere Schäumung, wenig Austritt von Eiweiß, kaum Geschmacksabgabe an die Brühe, geringerer Gewichtsverlust, Fleischgewebe geschlossener, besserer Geschmack, nicht ausgelaugt.
c)
   A. Starke Schaumbildung und starker Stärkeaustritt, leichter Verlust der gelben Farbe, starke Trübung des Wassers, ungleiche Garung, Kartoffelgeschmack geht an das Wasser.
   B. Wasser bleibt fast klar, sehr geringe Schäumung, gleichmäßige Garung, geringerer Stärkeverlust, Kartoffel behält natürliche Farbe bei, Wasser nimmt kaum Kartoffelgeschmack an, Kartoffeln brauchen weniger Salz.
d)
   A. Wasser ist sehr trüb und milchig, Stärkeaustritt, ungleiche Garung, sehr starke Schäumung.
   B. Geringe Schäumung, Wasser bleibt klar, weniger Stärkeaustritt, äußere Struktur geschlossen, bißfest, geringerer Salzbedarf.
e)
   A. Starke Quellung, Reis leicht stumpf, Zellgewebe leicht gerissen, relativ starker Austritt von Stärke in das Wasser.
   B. Reiskorn ist blank und trocken, sichtlich schonendere Garung, Reis hat weniger Wasser aufgenommen, geringerer Austritt von Reisstärke in das Wasser.
f)
   A. Fischfilet nimmt leicht graue Farbe an und bekommt starke Risse. Der Fischfond ist leicht bräunlich und enthält Schwebstoffe. Starke Schäumung, starker Eiweißaustritt, Fischgeschmack geht stark in den Fond über. Der gekochte Fisch schmeckt weniger nach Fisch und ist nach der Garung leicht klebrig. Garverlust: 9,8 %.
   B. Das Fischfilet bleibt schneeweiß, die Struktur geschlossen, glatt und trocken. Der Fond ist leicht milchig und enthält weniger Schwebstoffe. Es gibt kaum Eiweißaustritt, der Fischgeschmack bleibt voll erhalten, der Fond schmeckt wenig nach Fisch. Garverlust: 8,6 %.
g)
   A. Starke Abgabe von Farbstoffen an das Kochwasser, Konsistenz des Kochgutes schwammig. Es ist erkennbar, daß es sich um gefrorenes Gemüse handelt.
   B. Spargel bißfest, nicht schwammig, das Wasser bleibt klar, der Spargel gleicht frischem gekochtem Spargel.

## Patentansprüche

1. Verwendung von wenigstens teilweise entsalztem Wasser zum Garen von Nahrungs- und Genußmitteln.

2. Verwendung von Wasser nach Anspruch 1 zum Garen von pflanzlichen Produkten.

3. Verwendung von Wasser nach Anspruch 1 zum Garen von Fleisch oder Fisch.

4. Verwendung von Wasser nach Anspruch 1 zum Garen von tiefgefrorenen Nahrungs- und Genußmitteln.

5. Verwendung von Wasser nach Anspruch 1 zum Garen von Teigwaren.

6. Verwendung von Wasser nach einem der Ansprüche 1 bis 5 mit einer Karbonathärte von höchstens 8, vorzugsweise höchstens 7, besonders höchstens 2.

7. Verwendung von Wasser nach einem der Ansprüche 1 bis 6 mit einem pH-Wert unter 7,5, vorzugsweise von höchstens 7, besonders von höchstens 6,5.

8. Verwendung von Wasser nach einem der Ansprüche 1 bis 7 mit einer Gesamthärte von höchstens 12, vorzugsweise höchstens 10,5, insbesondere höchstens 5.

9. Verwendung von Wasser nach einem der Ansprüche 1 bis 8 mit einem Calciumkationengehalt von höchstens 60, vorzugsweise höchstens 20 mg/l.

10. Verwendung von Wasser nach einem der Ansprüche 1 bis 9 mit einem Gesamtgehalt von Na-, K-, Mg- und Ca-Kationen von höchstens 100, vorzugsweise höchstens 70, besonders höchstens 50 mg/l.

11. Verwendung von Wasser nach einem der Ansprüche 1 bis 9, das mit Hilfe eines Kationenaustauschers, vorzugsweise eines schwach sauren Kationenaustauschers in der Wasserstofform, gegebenenfalls im Gemisch mit einem Adsorptionsmittel, entsalzt wurde.
